# NEUE EUROPÄISCHE PATENTSCHRIFT

(11) **EP 1 565 518 B2**
(45) Veröffentlichungstag und Bekanntmachung des Hinweises auf die Entscheidung über den Einspruch: **17.06.2015**
(45) Hinweis auf die Patenterteilung: 09.07.2008
(21) Anmeldenummer: 03780054.7
(22) Anmeldetag: 25.11.2003
(51) Int. Cl.: C08K 3/16, C08L 27/06

(54) **STABILISATORZUSAMMENSETZUNG FÜR SCHÄUME HALOGENHALTIGER POLYMERE**
STABILIZER COMPOSITION FOR FOAMS OF HALOGEN-CONTAINING POLYMERS
COMPOSITION DE STABILISANT POUR MOUSSES DE POLYMERES HALOGENES

(30) Priorität: 26.11.2002 DE 10255154
(43) Veröffentlichungstag der Anmeldung: 24.08.2005
(73) Patentinhaber: Baerlocher GmbH, 85716 Unterschleissheim (DE)
(72) Erfinder: FOKKEN, Stefan, 85244 Biberbach (DE); SANDER, Hans-Jürgen, 64653 Lorsch (DE)
(74) Vertreter: Herzog, Fiesser & Partner Patentanwälte PartG mbB
(86) Internationale Anmeldenummer: PCT/EP2003/013257
(87) Internationale Veröffentlichungsnummer: WO 2004/048454

(56) Entgegenhaltungen:
- EP-A1- 0 432 495
- EP-A2- 0 256 872
- EP-A2- 0 394 547
- EP-A2- 0 457 471
- EP-A2- 0 522 810
- EP-A2- 0 677 550
- EP-A2- 0 768 336
- EP-A2- 1 046 668
- WO-A-02/094919
- WO-A-03/054072
- DE-A- 10 038 721
- JP-A- H09 118 767
- US-A- 5 190 700
- US-A- 5 543 449
- DATABASE WPI Section Ch, Week 199533 Derwent Publications Ltd., London, GB; Class A14, AN 1995-252351 XP002272269 -& JP 07 157587 A (SEKISUI CHEM IND CO LTD), 20. Juni 1995 (1995-06-20) in der Anmeldung erwähnt
- PATENT ABSTRACTS OF JAPAN vol. 2000, no. 26, 1. Juli 2002 (2002-07-01) -& JP 2001 261907 A (ASAHI DENKA KOGYO KK), 26. September 2001 (2001-09-26) in der Anmeldung erwähnt
- WICKSON E.J.: 'Handbook of Polyvinyl Chloride Formulating', 1993, JOHN WILEY & SONS Seiten 525 - 549

## Beschreibung

Die vorliegende Erfindung betrifft eine Stabilisatorzusammensetzung für Schäume halogenhaltiger Polymerer. Ebenso betrifft die vorliegende Erfindung auch ein Verfahren zur Herstellung einer Stabilisatorzusammensetzung für Schäume halogenhaltiger Polymerer sowie weiterhin die Verwendung einer Zusammensetzung zur Stabilisierung eines Schaums halogenhaltiger Polymerer. Gemäß einem weiteren Aspekt betrifft die vorliegende Erfindung auch einen Formkörper, der aus einem erfindungsgemäß stabilisierten Schaum mindestens eines halogenhaltigen Polymeren hergestellt wird.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymere, insbesondere beim Abbau von PVC, entsteht Salzsäure, die aus dem Polymerstrang eliminiert wird, woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht-stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymerer zu Formkörpern, beispielsweise durch Extrusion, zu Produktionsunterbrechungen kommt und die Polymermasse für eine längere Zeitdauer im Extruder verweilt. Während dieser Zeit kann es zu den oben genannten Zersetzungsreaktionen kommen, wodurch die im Extruder befindliche Charge unbrauchbar und der Extruder gegebenenfalls geschädigt wird.

Weiterhin neigen Polymere, die einer derartigen Zersetzung unterworfen sind, dazu, Anhaftungen an den Verarbeitungsanlagen zu bilden, die nur schwierig wieder zu entfernen sind.

Um die genannten Probleme zu lösen, werden halogenhaltigen Polymeren im Rahmen einer Verarbeitung üblicherweise sogenannte Stabilisatoren zugesetzt, welche die oben genannten Zersetzungsreaktionen möglichst weitgehend verhindern sollen. In der Regel handelt es sich bei derartigen Stabilisatoren um Feststoffe, die dem zu verarbeitenden Polymeren vor seiner Verarbeitung zugegeben werden.

In der Vergangenheit hat es sich jedoch häufig gezeigt, dass die Verarbeitung halogenhaltiger Polymerer zu Schäumen aufgrund des Einsatzes von Treibmitteln zu unbefriedigenden Ergebnissen im Hinblick auf Anfangsfarbe und Farbhaltung der entstehenden Polymerschäume führt. Insbesondere der Einsatz von Treibmitteln auf Basis von Azodicarbonsäureamid verschlechtert die oben genannten Eigenschaften der Schäume in erheblichem Maße.

Die deutsche Patentanmeldung mit dem Aktenzeichen DE 10124734.6 beschreibt eine Stabilisatorzusammensetzung für halogenhaltige Polymere, die ein Salz einer halogenhaltigen Oxysäure und eine anorganische oder organische Säure oder eine anorganische Base enthält. Im Rahmen der Beschreibung wird zwar auch der Einsatz von Treibmitteln beschrieben, ein synergistischer Effekt des gemeinsamen Einsatzes von Treibmitteln in einer bestimmten Mengen zusammen mit einem Salz einer halogenhaltigen Oxysäure bei der Herstellung von Schäumen halogenhaltiger Polymerer kann der Druckschrift jedoch nicht entnommen werden.

Die DE 198 60 798 und die DE 101 09 366 betreffen ebenso wie die Abstracts aus STN-Files CAPLUS, WPIX, JAPIO der Dokumente JP 2001261907 A, JP 2000290418 A, JP 09165463 A, JP 09118767 A, JP 07157587 A und JP 635035635 Stabilisatorzusammensetzungen für Halogenhaltige Polymere.

Die DE 100 56 880 betrifft Stabilisatorzusammensetzungen für halogenhaltige organische Kunststoffe, die Cyanacetylharnstoffe und weitere Verbindungen enthalten müssen.

Die DE 101 09 366 A1, die DE 199 15 388 A1 und die DE 101 18 179 befassen sich ebenfalls mit der Stabilisierung von halogenhaltigen Kunststoffen.

Der vorliegenden Erfindung lag daher die Aufgabe zugrunde, eine Stabilisatorzusammensetzung zur Verfügung zu stellen, die sich bei der Herstellung von Schäumen halogenhaltiger Polymerer einsetzen lässt und zu einer Verbesserung der Anfangsfarbe führt. Weiterhin lag der vorliegenden Erfindung die Aufgabe zugrunde, eine Stabilisatorzusammensetzung zur Verfügung zu stellen, welche sich bei der Herstellung von halogenhaltigen Polymeren einsetzen lässt. Weiterhin lag der Erfindung die Aufgabe zugrunde, eine Stabilisatorzusammensetzung zur Verfügung zu stellen, welche eine Verbesserung der Anfangsfarbe bei der Verarbeitung von Schäumen halogenhaltiger Polymerer im Vergleich zu aus dem Stand der Technik bekannten Stabilisatoren zeigt.

Die nachfolgend geschilderte Erfindung betrifft daher einerseits generell die Stabilisierung von Schäumen halogenhaltiger Polymerer, andererseits die Bereitstellung einer Stabilisatorzusammensetzung, die bereits auf die Bedürfnisse der Hersteller solcher Schäume zugeschnitten ist und neben einem stabilisierenden Anteil auch bereits ein Treibmittel enthält. Der Begriff "Stabilisatorzusammensetzung" wird daher im Rahmen des nachfolgenden Textes sowohl für Zusammensetzungen gebraucht, die sich zur Stabilisierung von Schäumen halogenhaltiger Polymerer eignen, als auch für Zusammensetzungen, die sowohl stabilisierende Komponenten als auch Treibmittel enthalten. Im Sinne der Verwendung einer erfindungsgemäßen Stabilisatorzusammensetzung umfasst und betrifft die vorliegende Erfindung einerseits den Einsatz bereits vorgemischter Stabilisatorzusammensetzungen, die ein Treibmittel enthalten. Andererseits werden auch diejenigen Sachverhalte umfasst, bei denen die Stabilisatorzusammensetzung erst kurz vor dem Einsatz im Polymeren zusammengemischt wird bzw. die Vermischung *in situ* im Polymeren bei dessen Verarbeitung erfolgt.

Es wurde nun gefunden, dass Stabilisatorzusammensetzungen, die mindestens ein Salz einer halogenhaltigen Oxysäure M(ClO₄)ₖ und mindestens einen Treibmittelanteil von zusammen mehr als 0,1 lGew.-%, bezogen auf das Gesamtgewicht der Stabilsatorzusammensetzung, aufweisen, und die Stabilisatorzusammensetzung das mindestens eine Salz einer halogenhaltigen Oxysäure im Bereich von 0,01 bis etwa 50 Gew.-%, und das mindestens eine Treibmittel in einer Menge im Bereich von 0,5 bis 50 Gew.-%, jeweils bezogen auf das Gesamtgewicht der Stabilisatorzusammensetzung, enthält, dadurch gekennzeichnet, dass die Zusammensetzung, bezogen auf den Gesamtgehalt an dem Salz einer halogenhaltigen Oxysäure, weniger als 10 % Kristallite des Salzes mit einer Kristallitgröße von mehr als 3 µm enthält, und dass das mindestens eine Salz einer halogenhaltigen Oxysäure M(ClO₄)ₖ mindestens ein Kation M aus der Gruppe bestehend aus Li, Na, K, Mg, Ca, Sr, Zn, Al, La oder Ce, oder ein Ammoniumkation der allgemeinen Formel NR₄⁺, wobei die Reste R unabhängig voneinander für H oder einen linearen oder verzweigten Alkylrest mit 1 bis etwa 10 C-Atomen stehen, enthält und k für 1, 2 oder 3 steht, die oben genannten Aufgaben lösen.

Gegenstand der vorliegenden Erfindung ist demgemäss eine Stabilisatorzusammensetzung gemäß Anspruch 1 für Schäume halogenhaltiger Polymerer.

Weiterhin wurde gefunden, dass sich eine Stabilisatorzusammensetzung, die mindestens ein Salz einer halogenhaltigen Oxysäure enthält, gemäß Anspruch 8 zur Stabilisierung von Polymerzusammensetzungen eignet.

Darüber hinaus wurde gefunden, dass Polymerzusammensetzungen, die die Stabilisatorzusammensetzung gemäß Anspruch 1 enthalten, die Nachteile von aus dem Stand der Technik bekannten treibmittelhaltigen Systemen nicht oder in geringerem Maße aufweisen.

Bei einer erfindungsgemäßen Stabilisatorzusammensetzung kann es sich sowohl um eine feste als auch um eine flüssige Stabilisatorzusammensetzung handeln. Wenn eine erfindungsgemäße Stabilisatorzusammensetzung im flüssigen Zustand vorliegt, so weist sie im Rahmen der vorliegenden Erfindung vorzugsweise mindestens ein organisches Lösemittel auf.

Unter einer "Stabilisatorzusammensetzung" wird im Rahmen der vorliegenden Erfindung eine Zusammensetzung verstanden, die zur Stabilisierung von Schäumen halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich, eine erfindungsgemäße Stabilisatorzusammensetzung dem zu stabilisierenden halogenhaltigen Polymeren während der Verarbeitung beizumischen.

Unter dem Begriff "flüssig" wird im Rahmen der vorliegenden Erfindung der Aggregatzustand einer erfindungsgemäßen Stabilisatorzusammensetzung mindestens innerhalb eines Temperaturbereichs von etwa 45 bis etwa 100°C, vorzugsweise innerhalb eines Temperaturbereichs von etwa 30 bis etwa 120 °C, beispielsweise innerhalb eines Temperaturbereichs von etwa 15 bis etwa 150 °C und insbesondere innerhalb eines Temperaturbereich von etwa 0 bis etwa 200 °C verstanden.

Als Salz einer halogenhaltigen Oxysäure M(ClO₄)ₖ eignet sich sowohl ein entsprechendes anorganisches als auch ein organisches Salz.

Unter dem Begriff "anorganisches Salz einer halogenhaltigen Oxysäure" wird im Rahmen des vorliegenden Textes ein Salz der allgemeinen Formel M(ClO₄)ₖ verstanden, wobei M ein anorganisches Kation ist. Als mögliche anorganische Kationen M sind unter anderem bevorzugt Li, Na, K, Mg, Ca, Sr, Zn, Al, La oder Ce zu nennen. Der Index k steht entsprechend der Wertigkeit von M im Falle der als unter anderem bevorzugt genannten Kationen für die Zahl 1, 2 oder 3.

Unter dem Begriff "organisches Salz einer halogenhaltigen Oxysäure" wird im Rahmen des vorliegenden Textes ein Salz der allgemeinen Formel M(ClO₄)ₖ verstanden, wobei M ein Amonium-Kation der allgemeinen Formel NR₄⁺, wobei die Reste R unabhängig voneinander für H oder einen linearen oder verzweigten Alkylrest mit 1 bis etwa 10 C-Atomen stehen

Ein im Rahmen der vorliegenden Erfindung einsetzbares Oniumperchlorat weist mindestens ein positiv geladenes N-, Atom oder zwei oder mehr solcher positiv geladener N-, Atome Atomtypen auf.

Im Rahmen der vorliegenden Erfindung werden als Oniumperchlorate Verbindungen eingesetzt, die am N, Atom mindestens einen organischen Rest und höchstens die maximal mögliche Zahl an organischen Resten

Es ist im Rahmen der vorliegenden Erfindung ebenso möglich und vorgesehen, dass ein im Rahmen einer erfindungsgemäßen Stabilisatorzusammensetzung einsetzbares Oniumsalz Substituenten aufweist, die ihrerseits durch eine oder mehrere funktionelle Gruppen substituiert sind. Als "funktionelle Gruppen" werden dabei Gruppen bezeichnet, welche die Wirkungen der Stabilisatorzusammensetzung verbessern oder zumindest nicht oder nur unwesentlich verschlechtern. Entsprechende funktionelle Gruppen können beispielsweise NH-Gruppen, NH₂-Gruppen, OH-Gruppen, SH-Gruppen, Estergruppen, Ethergruppen, Thioethergruppen, Isocyanuratgruppen oder Ketogruppen oder Gemische aus zwei oder mehr davon sein.

Als Ammoniumperchlorate sind im Rahmen der vorliegenden Erfindung grundsätzlich alle Verbindungen einsetzbar, die durch entsprechende Umsetzung geeigneter Reaktanden zu einem anspruchsgemäßen Ammoniumperchlorat führen. Dabei können erfindungsgemäß einsetzbare Ammoniumperchlorate beispielsweise durch entsprechende Umsetzung von Aminen oder Amiden wie Alkylmonoaminen, Alkylendiaminen, Alkylpolyaminen, sekundären oder tertiären Aminen oder Dialkylaminen erhalten werden. Geeignete Ammoniumperchlorate leiten sich daher beispielsweise von primären Mono- oder Polyaminoverbindungen mit 2 bis etwa 40, beispielsweise 6 bis etwa 20 C-Atomen ab. Beispielsweise sind dies Ethylamin, n-Propylamin, i-Propylamin, n-Butylamin, sek.-Butylamin, tert.-Butylamin, substituierte Amine mit 2 bis etwa 20 C-Atomen wie 2-(N,N-Dimethylamino)-1-aminoethan. Geeignete Diamine weisen beispielsweise zwei primäre, zwei sekundäre zwei tertiäre oder eine primäre und eine sekundäre oder eine primäre und eine tertiäre oder eine sekundäre und eine tertiäre Aminogruppe auf. Beispiele hierfür sind Diaminoethan, die isomeren Diaminopropane, die isomeren Diaminobutane, die isomeren Diaminohexane, Aminoethylethanolamin, oder Triamine wie die Diethylentriamin oder 1,8-Diamino-4-aminomethyloctan oder tertiäre Amine wie Triethylamin, Tributylamin, Dimethylbenzylamin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff,

Ebenfalls geeignet sind aliphatische Aminoalkohole mit 2 bis etwa 40, vorzugsweise 2 bis etwa 20 C-Atomen, beispielsweise Ethanolamin, Diethanolamin, Triethanolamin, Tripropanolamin, Tributanolamin, Tripentanolamin, 1-Amino-3,3-dimethyl-pentan-5-ol, 2-Aminohexan-2',2"-diethanolamin, 2-Aminopropanol, 2-Aminobutanol, 3-Aminopropanol, 1-Amino-2-propanol, 2-Amino-2-methyl-1-propanol, 5-Aminopentanol, 2-Amino-2-ethyl-1,3-propandiol, 2-(Dimethylaminoethoxy)-ethanol, sowie Gemische aus zwei oder mehr solcher Verbindungen eingesetzt werden.

Im Rahmen einer bevorzugten Ausführungsform der vorliegenden Erfindung werden als Ammoniumperchlorate Formamidiniumperchlorat, das Perchloratsalz des 2-(Diethylamino)-ethanols, oder Trioctylammoniumperchlorat oder Gemische aus zwei oder mehr davon eingesetzt.

Eine erfindungsgemäße Stabilisatorzusammensetzung kann im Rahmen der vorliegenden Erfindung beispielsweise nur eines der oben genannten organischen Oniumperchlorate oder nur eines der oben genannten anorganischen Perchlorate enthalten. Es ist im Rahmen der vorliegenden Erfindung ebenso möglich und auch vorgesehen, dass eine erfindungsgemäße Stabilisatorzusammensetzung ein Gemisch aus zwei oder mehr der obengenannten Perchlorate enthält. Es kann sich dabei um ein Gemisch von zwei oder mehr unterschiedlichen Typen von organischen Oniumperchloraten, d.h. beispielsweise um ein Gemisch von Ammoniumperchloraten handeln.

Wenn eine erfindungsgemäße Stabilisatorzusammensetzung ein Gemisch aus zwei oder mehr Oniumperchloraten enthält, so können diese zwei oder mehr Oniumperchlorate in der erfindungsgemäßen Stabilisatorzusammensetzung grundsätzlich in einem beliebigen Verhältnis vorliegen.

Eine erfindungsgemäße Stabilisatorzusammensetzung enthält im Rahmen der vorliegenden Erfindung, bezogen auf die gesamte Zusammensetzung, 0,01 bis etwa 30 Gew.-%, beispielsweise etwa 0,1 bis etwa 20 Gew.-% eines organischen Ammoniumsalzes eines Perchlorats oder eines Gemischs aus zwei oder mehr organischen Ammoniumsalzen von Perchloraten.

Gemäß einer weiteren bevorzugten Ausführungsform der erfindungsgemäßen Stabilisatorzusammensetzung liegt das Salz der halogenhaltigen Oxysäure in einer möglichst feinen Verteilung vor.

Gegenstand der vorliegenden Erfindung ist daher eine Stabilisatorzusammensetzung, wie oben beschrieben, die dadurch gekennzeichnet ist, dass die Zusammensetzung, bezogen auf den Gesamtgehalt an dem Salz einer halogenhaltigen Oxysäure, weniger als 10 % Kristallite des Salzes mit einer Kristallitgröße von mehr als 3 µm enthält.

Als Salze einer halogenhaltigen Oxysäure sind im Rahmen dieser Ausführungsform der erfindungsgemäßen Stabilisatorzusammensetzung Salze der allgemeinen Formel M(ClO₄)ₖ zu nennen, wobei M für Li, Na, K, Mg, Ca, Sr, Zn, Al, La, Ce oder ein Ammoniumkation der allgemeinen Formel NR₄⁺ steht, die Reste R unabhängig voneinander für H oder einen linearen oder verzweigten Alkylrest mit 1 bis etwa 10 C-Atomen und k entsprechend der Wertigkeit von M für die Zahl 1, 2 oder 3 stehen. Im Rahmen einer ganz besonders bevorzugten Ausführungsform der vorliegenden Erfindung enthält eine erfindungsgemäße Stabilisatorzusammensetzung in dieser Ausführungsform Natriumperchlorat.

Der Anteil an Salzen einer halogenhaltigen Oxysäure M(ClO₄)ₖ oder an Salzen eines Gemischs aus zwei oder mehr halogenhaltigen Oxysäuren an der erfindungsgemäße Stabilisatorzusammensetzung beträgt etwa 0,01 bis etwa 50 Gew.-%, insbesondere etwa 0,05 bis etwa 20 Gew.-%. Beispiele für Gehalte an Salzen einer halogenhaltigen Oxysäure oder eines Gemischs aus zwei oder mehr derartigen Salzen sind etwa 0,1 bis etwa 5 Gew.-% oder etwa 0,2 bis etwa 1,5 Gew.-%.

Die Salze der halogenhaltigen Oxysäuren M(ClO₄)ₖ kommen in einer erfindungsgemäßen Stabilisatorzusammensetzung, wie oben beschrieben, in besonders fein verteilter Form vor. Im Rahmen der vorliegenden Erfindung weisen dabei weniger als 10 Gew.-% der Salze der halogenhaltigen Oxysäure M(ClO₄)ₖ oder des Gemischs aus zwei oder mehr solcher Salze Kristallite mit einer Größe von mehr als 3 µm auf. Daraus folgt, dass mindestens etwa 90 Gew.-% der Salze Kristallite mit einer Größe von weniger als 3 µm aufweisen.

Im Rahmen einer weiteren bevorzugten Ausführungsform der vorliegenden Erfindung weist eine erfindungsgemäße Stabilisatorzusammensetzung ein Salz einer halogenhaltigen Oxysäure M(ClO₄)ₖ oder eines Gemischs aus zwei oder mehr halogenhaltigen Oxysäuren M(ClO₄)ₖ auf, wobei weniger als etwa 10 Gew.-% des Salzes oder des Salzgemischs in Form von Kristalliten mit einer Größe von mehr als 1 µm, vorzugsweise mit einer Größe von mehr als 500 nm vorliegen. Im Rahmen einer weiteren bevorzugten Ausführungsform der vorliegenden Erfindung ist eine erfindungsgemäße Stabilisatorzusammensetzung im wesentlichen frei von Kristalliten von Salzen halogenhaltiger Oxysäuren M(ClO₄)ₖ mit einer Kristallitgröße von mehr als etwa 250 nm. Im Rahmen besonders bevorzugter Ausführungsformen der vorliegenden Erfindung enthält eine erfindungsgemäße Stabilisatorzusammensetzung weniger als etwa 10 Gew.-% des Salzes oder des Salzgemischs in Form von Kristalliten mit einer Größe von mehr als etwa 100 nm oder mehr als etwa 50 nm oder mehr als etwa 20 nm oder mehr als etwa 10 oder etwa 5 nm.

Die Kristallitgrößen von Salzen halogenhaltiger Oxysäuren M(ClO₄)ₖ, wie sie im Rahmen des vorliegenden Textes genannt werden, lassen sich grundsätzlich durch beliebige Methoden zur Bestimmung von Partikelgrößen bestimmen. Grundsätzlich geeignet sind beispielsweise Siebverfahren, Sedimentationsverfahren oder Verfahren die auf der Beugung oder Brechung von elektromagnetischen Wellen, insbesondere von Licht, beruhen. Darüber hinaus geeignet sind elektronenmikroskopische Verfahren wie die Rasterelektronenmikroskopie oder die Transmissionselektronenmikroskopie oder Laserbeugungsverfahren.

Gemäß einer weiteren Ausführungsform enthält die erfindungsgemäße Stabilisatorzusammensetzung eine anorganische oder organische Säure oder eine anorganische Base. Bei den anorganischen oder organische Säuren oder den anorganischen Basen handelt es sich um feste Verbindungen, die zur Bildung von vorzugsweise festen Säure- oder Basenanhydriden fähig sind. Geeignet sind beispielsweise zur Anhydridbildung befähigte organische Säuren, beispielsweise Maleinsäure, Phthalsäure oder Bernsteinsäure.

Weiterhin geeignet sind beispielsweise zur Anhydridbildung befähigte anorganische Säuren, beispielsweise Borsäure.

Besonders als Bestandteil der erfindungsgemäßen Stabilisatorzusammensetzung geeignet sind jedoch anorganische Basen, die zur Bildung von Anhydriden befähigt sind. Geeignete anorganische Basen sind die Hydroxide der Elemente der ersten und zweiten Hauptgruppe des Periodensystems sowie die Hydroxide der Elemente der ersten Nebengruppe des Periodensystems. Besonders geeignet sind Magnesiumhydroxid, Calciumhydroxid, Bariumhydroxid oder Strontiumhydroxid.

Eine erfindungsgemäße Stabilisatorzusammensetzung kann im Rahmen der vorliegenden Erfindung beispielsweise nur eine organische oder anorganische Säure oder eine anorganische Base enthalten. Es ist im Rahmen der vorliegenden Erfindung jedoch ebenso vorgesehen, dass eine erfindungsgemäße Stabilisatorzusammensetzung ein Gemisch aus zwei oder mehr organischen Säuren oder zwei oder mehr anorganischen Säuren oder ein Gemisch aus zwei oder mehr anorganischen Basen oder ein Gemisch aus einer oder mehreren organischen Säuren oder einer oder mehreren anorganischen Säuren enthält.

Im Rahmen einer bevorzugten Ausführungsform der vorliegenden Erfindung enthält eine erfindungsgemäße Stabilisatorzusammensetzung als anorganische Base Calciumhydroxid oder Magnesiumhydroxid, insbesondere Calciumhydroxid.

Die oben genannten Salze halogenhaltiger Oxysäuren M(ClO₄)ₖ eignen sich bereits als solche zur Stabilisierung von Polymerzusammensetzungen, die mindestens 0,1 Gew.-% eines Treibmittels oder eines Gemischs aus zwei oder mehr Treibmitteln enthalten. Gegenstand der vorliegenden Erfindung ist daher auch die Verwendung eines Salzes einer halogenhaltigen Oxyxsäure oder eines Gemischs aus zwei oder mehr solcher Salze in einer Zusammensetzung zur Stabilisierung einer Polymerzusammensetzung, die mindestens ein halogenhaltiges Polymeres und mindestens 0,1 Gew.-% eines Treibmittels enthält, wobei die Zusammensetzung, bezogen auf den Gesamtgehalt an dem Salz einer halogenhaltigen Oxysäure, weniger als 10 % Kristallite des Salzes mit einer Kristallitgröße von mehr als 3 µm enthält.

Als weiteren Bestandteil umfasst eine erfindungsgemäße Stabilisatorzusammensetzung mindestens ein Treibmittel. Als Treibmittel können hierbei grundsätzlich sämtliche geeigneten Verbindungen eingesetzt werden. Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon. Ganz besonders geeignet und im Rahmen der vorliegenden Erfindung bevorzugt als Treibmittel ist Azodicarbonamid.

Gegenstand der vorliegenden Erfindung ist demgemäss auch eine Stabilisatorzusammensetzung, wie oben beschrieben, die dadurch gekennzeichnet ist, dass das Treibmittel Azodicarbonamid ist.

Die einzelnen Treibmittel umfassen im Rahmen des vorliegenden Textes auch Zubereitungen, die das jeweilige oder die jeweiligen Treibmittel enthalten. Solche Zubereitungen können beispielsweise neben den Treibmitteln Verbindungen enthalten, die den Treibmitteln zu einer Erhöhung der Stabilität, beispielsweise im Hinblick auf Transport oder/und Lagerbeständigkeit, zugegeben wurden.

Gemäß einer weiter bevorzugten Ausführungsform enthält die erfindungsgemäße Stabilisatorzusammensetzung das mindestens eine Treibmittel in einem Anteil von 0,5 bis 30 Gew.-%.

Daher ist Gegenstand der vorliegenden Erfindung auch eine Stabilisatorzusammensetzung, wie oben beschrieben, die dadurch gekennzeichnet ist, dass die Zusammensetzung das mindestens ein Treibmittel in einer Menge im Bereich von 0,5 bis 50 Gew.-%, beispielsweise etwa 1 bis etwa 30 oder etwa 2,5 bis etwa 20 Gew.-%, bezogen auf das Gesamtgewicht der Stabilisatorzusammensetzung, enthält.

Eine erfindungsgemäße Stabilisatorzusammensetzung kann im Rahmen der vorliegenden Erfindung in festem oder flüssigem Zustand vorliegen. Je nach Aggregatszustand kann die erfindungsgemäße Zusammensetzung beispielsweise eines oder mehrere der nachfolgend aufgezählten Lösemittel oder einen oder mehrere der nachfolgenden Zusatzstoffe aufweisen.

Im Rahmen der vorliegenden Erfindung als Zusatzstoffe geeignet sind beispielsweise Aminouracilverbindungen der allgemeinen Formel II 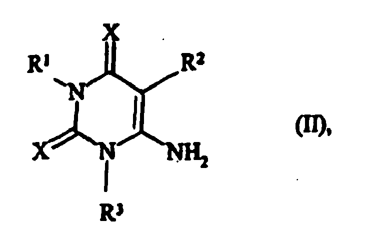 worin die Reste R¹ und R² jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht und worin X für S oder O steht.

Im Rahmen einer weiteren bevorzugten Ausführungsform der vorliegenden Erfindung werden in den erfindungsgemäßen Stabilisatorzusammensetzungen Verbindungen der allgemeinen Formel II eingesetzt, bei denen R¹ und R³ für einen linearen oder verzweigten Alkylrest mit 1 bis 6 C-Atomen, beispielsweise Methyl, Ethyl, Propyl, Butyl, Pentyl oder Hexyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen, Hydroxy oder Methoxy substituiert sein können oder einen Alkenylrest mit 3 bis 6 C-Atomen, beispielsweise Vinyl, Alkyl, Methallyl, 1-Butenyl oder 1-Hexenyl stehen.

Im Rahmen einer bevorzugten Ausführungsform der vorliegenden Erfindung werden in den erfindungsgemäßen Stabilisatorzusammensetzungen Verbindungen der allgemeinen Formel III eingesetzt, worin R¹ und R³ für Wasserstoff, Methyl, Ethyl, n-Propyl, Isopropyl, n-, i-, sec- oder t-Butyl stehen.

Als Zusatzstoffe eignen sich weiterhin beispielsweise generell Verbindungen mit einem Strukturelement der allgemeinen Formel III 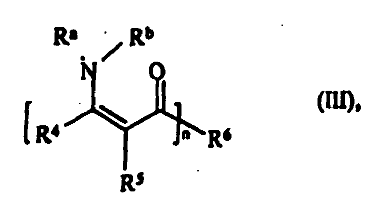 worin n für eine Zahl von 1 bis 100.000, die Reste R^{a}, R^{b}, R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R⁴ für einen gegebenenfalls substituierten Acylrest mit 2 bis 44 C-Atomen steht oder die Reste R⁴ und R⁵ zu einem aromatischen oder heterocyclischen System verbunden sind und worin der Rest R⁶ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen; einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR^{a} oder CH₂C(O) mit dem in Klammern stehenden Strukturelement verbunden ist, steht oder der Rest R⁶ mit dem Rest R⁴ so verbunden ist, dass insgesamt ein gegebenenfalls substituiertes, gesättigtes oder ungesättigtes heterocyclisches Ringsystem mit 4 bis 24 C-Atomen gebildet wird.

Im Rahmen einer bevorzugten Ausführungsform der vorliegenden Erfindung wird als Verbindung der allgemeinen Formel III eine auf einer α,β-ungesättigten β-Aminocarbonsäure, insbesondere eine auf β-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen.

Daher ist Gegenstand der vorliegenden Erfindung auch eine Stabilisatorzusammensetzung, wie oben beschrieben, die dadurch gekennzeichnet ist, dass die Zusammensetzung mindestens eine auf einer α,β-ungesättigten β-Aminocarbonsäure basierenden Verbindung enthält.

Wenn der Rest R⁶ für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, Butylenglykol, 1,3-Butandiol, 1,4-Butandiol, 1,6-Hexandiol, 1,10-Decandiol, Diethylenglykol, Thio-Diethanol, Trimethylolpropan, Glyzerin, Tris-(2-hydroxymethyl)-isocyanurat, Triethanolamin, Pentaerythrit, Di-Trimethylolpropan, Diglyzerin, Sorbitol, Mannitol, Xylitol, Di-Pentaerythrit sowie den entsprechenden Mercaptoderivaten der genannten Alkohole gebildet werden.

Im Rahmen einer besonders bevorzugten Ausführungsform der vorliegenden Erfindung wird als Verbindung der allgemeinen Formel III eine Verbindung eingesetzt, in der R⁴ für einen linearen Alkylrest mit 1 bis 4 C-Atomen, R⁵ für Wasserstoff und R⁶ für einen linearen oder verzweigten, gesättigten, ein- bis sechswertigen Alkyl- oder Alkylenrest mit 2 bis 12 C-Atomen oder einen linearen, verzweigten oder cyclischen 2- bis 6-wertigen Etheralkoholrest oder Thioetheralkoholrest steht.

Geeignete Verbindungen der allgemeinen Formel III umfassen beispielsweise β-Aminocrotonsäurestearylester, 1,4-Butandiol-di(β-aminocrotonsäure)ester, Thio-diethanol-β-aminocrotonsäureester, Trimethylolpropan-tri-β-aminocrotonsäureester, Pentaerythrit-tetra-β-aminocrotonsäureester, Dipentaerythrit-hexa-β-aminocrotonsäureester und dergleichen. Die genannten Verbindungen können in einer erfindungsgemäßen Stabilisatorzusammensetzung jeweils alleine oder als Gemisch aus zwei oder mehr davon enthalten sein.

Ebenfalls als Verbindungen der allgemeinen Formel III geeignet sind beispielsweise Verbindungen, in denen die Reste R⁴ und R⁵ zu einem aromatischen oder heteroaromatischen System verbunden sind, beispielsweise Aminobenzoesäure, Aminosalicylsäure oder Aminopyridincarbonsäure und deren geeignete Derivate.

Im Rahmen einer bevorzugten Ausführungsform der vorliegenden Erfindung enthält eine erfindungsgemäße Stabilisatorzusammensetzung eine Verbindung der allgemeinen Formel III, in einer Menge von etwa 0,1 bis etwa 99,5 Gew.-%, insbesondere etwa 5 bis etwa 50 Gew.-% oder etwa 5 bis etwa 25 Gew.-%.

Ebenfalls als Zusatzstoffe zu den erfindungsgemäßen Stabilisatorzusammensetzung geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Calcium oder Zink oder Blei oder Gemische aus zwei oder mehr davon.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer weiteren Ausführungsform der vorliegenden Erfindung werden als Zusatzstoffe Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, Hydroxystearate, Dihydroxystearate, p-tert-Butylbenzoate oder (Iso)Octanoate von Calcium oder Zink oder Gemische aus zwei oder mehr davon. Im Rahmen einer weiteren Ausführungsform der vorliegenden Erfindung weist eine erfindungsgemäße Stabilisatorzusammensetzung Calciumstearat oder Zinkstearat oder deren Gemisch auf.

Eine erfindungsgemäße Stabilisatorzusammensetzung kann die genannten Metalloxide, Metallhydroxide oder Metallseifen oder ein Gemisch aus zwei oder mehr davon, in einer Menge von bis zu etwa 50 Gew.-%, beispielsweise in einer Menge von bis etwa 30 Gew.-%, enthalten.

Im Rahmen einer besonders bevorzugten Ausführungsform der vorliegenden Erfindung sind die erfindungsgemäßen Stabilisatorzusammensetzungen jedoch frei von Zink und insbesondere frei von Blei oder Cadmium.

Daher ist Gegenstand der vorliegenden Anmeldung auch eine Stabilisatorzusammensetzung, wie oben beschrieben, die dadurch gekennzeichnet ist, dass die Zusammensetzung im wesentlichen frei von Zink, Blei oder Cadmium ist.

Eine erfindungsgemäße Stabilisatorzusammensetzung kann mindestens ein organisches Lösemittel enthalten. Dies ist beispielweise besonders bevorzugt dann der Fall, denn die erfindungsgemäße Stabilisatorzusammensetzung im flüssigen Zustand vorliegt.

Unter einem "Lösemittel" wird im Rahmen der vorliegenden Erfindung eine Verbindung oder ein Gemisch aus zwei oder mehr Verbindungen verstanden, das innerhalb eines bestimmten Temperaturbereichs flüssig und dazu in der Lage ist, das mindestens eine, im Rahmen der vorliegenden erfindungsgemäßen Stabilisatorzusammensetzung eingesetzte halogenhaltige Salz einer Oxysäure in einer Menge von mindestens 0,1 Gew.-%, bezogen auf das Gesamtgewicht des mindestens einen ungelösten halogenhaltigen Salzes der Oxysäure, zu lösen. Ein im Rahmen der vorliegenden Erfindung geeignetes Lösemittel ist mindestens innerhalb eines Temperaturbereichs von etwa 45 bis etwa 100 °C, vorzugsweise innerhalb eines Temperaturbereichs von etwa 30 bis etwa 120 °C, beispielsweise innerhalb eines Temperaturbereichs von etwa 15 bis etwa 150 °C und insbesondere innerhalb eines Temperaturbereich von etwa 0 bis etwa 200 °C flüssig.

Im Rahmen einer bevorzugten Ausführungsform der vorliegenden Erfindung werden als Lösemittel Verbindungen oder Gemische aus zwei oder mehr Verbindungen eingesetzt, die als Weichmacher für halogenhaltige Polymere geeignet sind.

Als Lösemittel im Sinne des vorliegenden Textes geeignet sind daher beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Dimethylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Lösemittel geeignet sind die Ester aliphatischer Dicarbonsäuren, insbesondere die Ester von Adipin-, Azelain- oder Sebacinsäure oder Gemische aus zwei oder mehr davon. Beispiele für derartige Lösemittel sind Di-2-ethylhexyladipat, Di-isooctyladipat, Di-isononyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Lösemittel geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Lösemittel sind beispielsweise Polymerweichmacher, wie sie in "Kunststoffadditive", R. Gächter/H. Müller, Carl Hanser Verlag, 3. Auflage, 1989, Kapitel 5.9.6, Seiten 342-489, oder "PVC Technology", W. V. Titow, 4th Edition, Elsevier Publishers, 1984, Seiten 165-170, angegeben sind. Auf die genannten Druckschriften wird hiermit ausdrücklich verwiesen und die im Rahmen der zuerst genannten Fundstelle (R. Gächter/H. Müller) aufgeführten und als Lösemittel im erfindungsgemäßen Sinne geeigneten Weichmacher, insbesondere die in den Tabellen 9a (S.388 - 392), 10 (S. 396), 11(S. 400), 12a (S. 402 - 404), 13a (S. 408 - 410), 13b (S. 412), 14 (S. 413), 16 (S. 418), 3 (S. 479) und 4 (S. 486 - 488) genannten Verbindungen, werden als Bestandteil der Offenbarung des vorliegenden Textes betrachtet.

Die gebräuchlichsten Ausgangsmaterialien für die Herstellung von Polyesterweichmacher sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Besonders als Lösemittel im Rahmen der vorliegenden Erfindung geeignet sind die nachfolgend aufgezählten Verbindungen: 2-Hydroxy-5-methyl-benzoesäuremethylester, 2-Ethoxybenzylalkohol, N-Ethyl-2,3-dimethylanilin, 2-Hydroxy-3-methyl-benzoesäuremethylester, Laurinsäurebenzylester, 3,4,5-Trimethoxybenzylalkohol, 3,5-Dimethylbenzylalkohol, 3-Methylbenzophenon, 2-Methoxyactetophenon, 3-Cyclohexylpropionsäure, Cyclopentancarbonsäure, 2,5-Dimethylbenzonitril, 4-(4-Methoxyphenyl)-butan-2-on, Ameisensäurezimtester, Triethylcitrat, Decandisäuredibutylester, Heptaethylenglykol, Decandisäurediethylester, Adipinsäuredibutylester, 1,2-Bis(2-acetoxy-ethoxy)-ethan, Azelainsäurediethylester, Korksäurediethylester, Glutarsäurediethylester, Myristinsäureethylester, Oxalsäuredibutylester, 9-Decenylpropionat, Laurinsäuremethylester, Essigsäuredecylester, Cyanessigsäurebutylester, Hexansäurepentylester, Essigsäurenonylester, Decansäuremethylester, Nonansäuremethylester, Undecylenalkohol, N-Methyldioctylamin, Diethylenglykoldibutylether, Dioctylether, Decan-3-on, 4-Oxa-Heptandinitril, Nonannitril, Diethylenglykolmonohexylether, Diisobutylketon, Ameisensäurebutylester, n-Tridecylalkohol, Butylcarbitol, Glutarsäuredinitril, Propionsäuremethylester, Thioameisensäuredimethylamid, Octamethylendimercaptan, 2-Ethylhexan-1,3-diol, Decan-4-ol, Decan-1-thiol, Hexamethylendimercaptan, Trimethylenjodid, Dodecan-2-ol, N-Butylformamid, Diisopentylsulfid, Hexaethylenglycol, Pentaethylenglykol, Trioctylamin, Dipropylentriamin, Triethylenglykol, Dodecylmercaptan, 2,2'-Dithiodiglykol, Diethylcarbonat, m-Tolylisothiocyanat, Linolensäure, Triethylentetramin, 5H-Furan-2-on, 4-Benzylpiperidin, 1-Phenylpiperidin, Isonikotinsäureethylester, Pyridin-2-carbonsäureethylester, 2,3,3-Trimethyl-3H-indol, 3-Methylsulfolan, Propylencarbonat, 3-Piperidinopropionitril, Sulfolan, Tetrahydrothiophen-1-oxid, 4-Morpholinoethanol oder 4-Octylanilin.

Die oben genannten Lösemittel können in einer erfindungsgemäßen Stabilisatorzusammensetzung jeweils alleine oder als Gemisch aus zwei oder mehr davon vorliegen. Wenn es sich bei einer erfindungsgemäßen Stabilisatorzusammensetzung um eine flüssige Stabilisatorzusammensetzung handelt die zwei oder mehr der oben genannten Verbindungen als Lösemittel enthält, so kann eine der Verbindungen oder mehrere der Verbindungen außerhalb der oben genannten Definition des Begriffs "flüssig" liegen, sofern das gesamte Lösemittelgemisch innerhalb dieser Definition liegt.

Eine erfindungsgemäße Stabilisatorzusammensetzung enthält Lösemittel oder Lösemittelgemisch in einer Menge von kleiner etwa 99,9 bis etwa 2 Gewichtsprozent, beispielsweise etwa 98 bis etwa 3 oder etwa 95 bis etwa 5 Gewichtsprozent. Der Gehalt an Lösemittel kann in weiten Grenzen variieren, je nachdem, ob die erfindungsgemäße Stabilisatorzusammensetzung als alleiniger Stabilisator oder zusammen mit einem oder mehreren Zusatzstoffen eingesetzt wird oder in einem festen oder flüssigen Zustand vorliegen soll. So kann eine flüssige erfindungsgemäße Stabilisatorzusammensetzung beispielsweise einen Anteil an Lösemittel von etwa 20 bis etwa 99,9 Gew.-% oder etwa 99 bis etwa 30 Gew.-% oder etwa 95 bis etwa 35 Gew.-% oder etwa 90 bis etwa 40 Gew.-% oder etwa 85 bis etwa 50 Gew.-% aufweisen. Bei einer festen erfindungsgemäßen Stabilisatorzusammensetzung kann der Anteil an Lösemittel beispielsweise etwa 50 bis etwa 0,01 Gew.-% oder etwa 45 bis etwa 0,1 Gew.-% oder etwa 40 bis etwa 1 Gew.% oder etwa 35 bis etwa 3 Gew.-% oder etwa 30 bis etwa 5 Gew.-% betragen.

Neben dem mindestens einen Salz einer halogenhaltigen Oxysäure M(ClO₄)ₖ, dem mindestens einen Treibmittel und den bereits oben beschriebenen Zusatzstoffen wie etwa dem mindestens einen Lösemittel kann eine erfindungsgemäße Stabilisatorzusammensetzung noch einen oder mehrere weitere Zusatzstoffe in einer Menge von bis zu etwa 95 Gew.-%, beispielsweise bis zu etwa 93 Gew.-% oder etwa 91 Gew.-% oder etwa 0 bis etwa 90 Gew.-% oder etwa 1 bis etwa 85 Gew.-% enthalten.

Als Zusatzstoffe geeignet sind beispielsweise Aminoalkohole. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Stabilisatorzusammensetzungen geeignet. Sollte im Rahmen der vorliegenden Erfindung die Stabilisatorzusammensetzung beispielsweise in fester Form vorliegen, wird der Anteil an flüssigen Aminoalkoholen jedoch beispielsweise so gewählt, dass die gesamte Stabilisatorzusammensetzung im wesentlichen in fester Form vorliegt.

Im Rahmen einer weiteren bevorzugten Ausführungsform der vorliegenden Erfindung enthält eine erfindungsgemäße Stabilisatorzusammensetzung höchstens etwa 5 Gew.-% an flüssigem Aminoalkohol oder einem Gemisch aus zwei oder mehr flüssigen Aminoalkoholen, vorzugsweise liegt der Anteil jedoch darunter, beispielsweise bei 1 Gew.-% oder weniger. Im Rahmen einer besonders bevorzugten Ausführungsform der vorliegenden Erfindung enthält eine erfindungsgemäße Stabilisatorzusammensetzung keine flüssigen Aminoalkohole.

Im Rahmen der vorliegenden Erfindung einsetzbare Aminoalkohole weisen im Rahmen einer bevorzugten Ausführungsform der vorliegenden Erfindung einen Schmelzpunkt von mehr als etwa 30 °C, insbesondere mehr als etwa 50 °C auf. Geeignete Aminoalkohole sind beispielsweise Mono- oder Polyhydroxyverbindungen, die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, sek.-Propylamin, tert.-Butylamin, 1-Aminoisobutan, substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol; 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Im Rahmen einer besonders bevorzugten Ausführungsform der vorliegenden Erfindung werden als Aminoalkohole heterocyclische Verbindungen eingesetzt, die über ein cyclisches, Aminogruppen aufweisendes Ringsystem verfügen, wobei die OH-Gruppen entweder direkt am Ring oder vorzugsweise über Spacer mit diesem verbunden sind.

Im Rahmen einer besonders bevorzugten Ausführungsform der vorliegenden Erfindung werden dabei heterocyclische Aminoalkohole eingesetzt, die mindestens 2, vorzugsweise mindestens 3 Aminogruppen im Ring aufweisen. Als zentraler Ringbestandteil der erfindungsgemäß einsetzbaren Aminoalkohole besonders geeignet sind hierbei die Trimerisierungsprodukte von Isocyanaten.

Besonders bevorzugt werden dabei hydroxylgruppenhaltige Isocyanurate der bereits oben beschriebenen allgemeinen Formel I 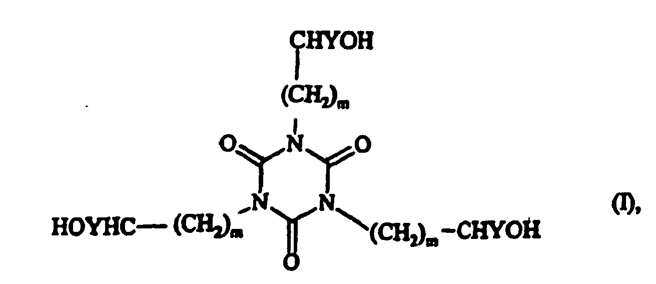 worin die Gruppen Y und die Indices m jeweils gleich oder verschieden sind und m für eine ganze Zahl von 0 bis 20 und Y für ein Wasserstoffatom oder eine lineare oder verzweigte, gesättigte oder ungesättigte Alkylgruppe mit 1 bis etwa 10 C-Atomen steht. Besonders bevorzugt ist im Rahmen der vorliegenden Erfindung der Einsatz von Tris(hydroxyethyl)isocyanurat (THEIC) als Bestandteil der erfindungsgemäßen Stabilisatorzusammensetzungen.

Eine erfindungsgemäße Stabilisatorzusammensetzung kann beispielsweise nur einen Aminoalkohol enthalten. Es ist im Rahmen der vorliegenden Erfindung jedoch ebenso vorgesehen, dass eine erfindungsgemäße Stabilisatorzusammensetzung ein Gemisch aus zwei oder mehr verschiedenen Aminoalkoholen enthält.

Als weitere Zusatzstoffe sind beispielsweise Verbindungen geeignet, die ein mercaptofunktionelles sp²-hybridisiertes C-Atom aufweisen, Carbazole, Carbazolderivate oder 2,4-Pyrrolidindion oder 2,4-Pyrrolidindion-Derivate.

Als Verbindungen, die mindestens ein mercaptofunktionelles, sp²-hybridisiertes C-Atom aufweisen eignen sich im Rahmen der vorliegenden Erfindung grundsätzlich alle Verbindungen, die ein Strukturelement Z=CZ-SH oder ein Strukturelement Z₂C=S aufweisen, wobei beide Strukturelemente tautomere Formen einer einzigen Verbindung sein können. Das sp²-hybridisierte C-Atom kann dabei Bestandteil einer gegebenenfalls substituierten aliphatischen Verbindung oder Bestandteil eines aromatischen Systems sein. Geeignete Verbindungstypen sind beispielsweise Thiocarbamidsäurederivate, Thiocarbamate, Thiocarbonsäuren, Thiobenzoesäurederivate, Thioacetonderivate oder Thioharnstoff oder Thioharnstoffderivate. Z steht dabei für Atome oder Strukturelemente, die zur Teilnahme an einer entsprechenden Tautomeric geeignet sind, beispielsweise N oder C.

Im Rahmen einer weiteren Ausführungsform der vorliegenden Erfindung wird als Zusatzstoff mit mindestens einem mercaptofunktionellen, sp²-hybridisierten C-Atom Thioharnstoff oder ein Thioharnstoffderivat eingesetzt.

Ebenfalls als Zusatzstoffe für die erfindungsgemäßen Stabilisatorzusammensetzungen eignen sich beispielsweise Carbazol oder Carbazolderivate oder Gemische aus zwei öder mehr davon.

Weiterhin als Zusatzstoffe geeignet sind beispielsweise 2,4-Pyrrolidindion oder dessen Derivate, wie sie beispielsweise in der nicht vorveröffentlichten deutschen Patentanmeldung mit dem Aktenzeichen 101 09 366.7 genannt werden.

Ebenfalls als Zusatzstoffe eignen sich weiterhin beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder Schwefelatom gebunden ist. Glycidyl- oder Methylglycidylester sind durch Umsetzung einer Verbindung mit mindestens einer Carboxylgruppe im Molekül und Epichlorhydrin bzw. Glyzerindichlorhydrin bzw. Methyl-epichlorhydrin erhältlich. Die Umsetzung erfolgt zweckmäßigerweise in Gegenwart von Basen.

Als Verbindungen mit mindestens einer Carboxylgruppe im Molekül können beispielsweise aliphatische Carbonsäuren eingesetzt werden. Beispiele für diese Carbonsäuren sind Glutarsäure, Adipinsäure, Pimelinsäure, Korksäure, Azelainsäure, Sebacinsäure oder dimerisierte oder trimerisierte Linolsäure, Acrylsäure, Methacrylsäure, Capronsäure, Caprylsäure, Laurinsäure, Myristinsäure, Palmitinsäure, Stearinsäure oder Pelargonsäure sowie die im weiteren Verlauf dieses Textes erwähnten Mono- oder Polycarbonsäuren. Ebenfalls geeignet sind cycloaliphatische Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Weiterhin geeignet sind aromatische Carbonsäuren wie Benzoesäure, Phthalsäure, Isophthalsäure, Trimellithsäure oder Pyromellithsäure.

Glycidylether oder Methylglycidylether lassen sich durch Umsetzung einer Verbindung mit mindestens einer freien alkoholischen OH-Gruppe oder einer phenolischen OH-Gruppe und einem geeignet substituierten Epichlorhydrin unter alkalischen Bedingungen oder in Anwesenheit eines sauren Katalysators und anschließender Alkalibehandlung erhalten. Ether dieses Typs leiten sich beispielsweise von acyclischen Alkoholen wie Ethylenglykol, Diethylenglykol oder höheren Poly(oxyethylen)glykolen, Propan-1,2-diol oder Poly(oxypropylen)glykolen, Butan-1,4-diol, Poly(oxytetramethylen)glykolen, Pentan-1,5-diol, Hexan-1,6-diol, Hexan-2,4,6-triol, Glyzerin, 1,1,1-Trimethylolpropan, Bis-Trimethylolpropan, Pentaerythrit, Sorbit sowie von Polyepichlorhydrinen, Butanol, Amylalkohol, Pentanol sowie von monofunktionellen Alkoholen wie Isooctanol, 2-Ethylhexanol, Isodecanol oder technischen Alkoholgemischen, beispielsweise technischen Fettalkoholgemischen, ab.

Geeignete Ether leiten sich auch von cycloaliphatischen Alkoholen wie 1,3- oder 1,4-Dihydroxycyclohexan, Bis(4-hydroxycyclohexyl)methan, 2,2-Bis(4-hydroxycyclohexyl)propan oder 1,1-Bis-(hydroxymethyl)cyclohexan-3-en ab oder sie besitzen aromatische Kerne wie N,N-Bis-(2-hydroxyethyl)anilin. Geeignete Epoxyverbindungen können sich auch von einkernigen Phenolen ableiten, beispielsweise von Phenol, Resorcin oder Hydrochinon, oder sie basieren auf mehrkernigen Phenolen wie Bis(4-hydroxyphenyl)methan, 2,2-Bis (4-hydroxyphenyl)propan, 2,2-Bis(3,5-dibrom-4-hydroxyphenyl)propan, 4,4'-Dihydroxydiphenylsulfonen oder auf unter sauren Bedingungen erhaltenen Kondensationsprodukten von Phenol mit Formaldehyd, beispielsweise Phenol-Novolaken.

Weitere im Rahmen der vorliegenden Erfindung als Zusatzstoffe geeignete, endständige Epoxide sind beispielsweise Glycidyl-1-naphthylether, Glycidyl-2-phenylphenylether, 2-Diphenylglycidylether, N-(2,3-Epoxypropyl)phthalimid oder 2,3-Epoxypropyl-4-methoxyphenylether.

Ebenfalls geeignet sind N-Glycidylverbindungen, wie sie durch Dehydrochlorierung der Reaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan. Ebenfalls geeignet sind S-Glycidylverbindungen, beispielsweise Di-S-glycidyletherderivate, die sich von Dithiolen wie Ethan-1,2-dithiol oder Bis(4-mercaptomethylphenyl)ether ableiten.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und die als Bestandteil der Offenbarung des vorliegenden Textes betrachtet wird.

Weiterhin als Zusatzstoffe im Rahmen der vorliegenden Erfindung geeignet sind 1,3-Diearbonylverbindungen, insbesondere die β-Diketone und β-Ketoester. Im Rahmen der vorliegenden Erfindung geeignet sind Dicarbonylverbindungen der allgemeinen Formel R' C(O)CHR''-C(O)R''', wie sie beispielsweise auf S. 5 der EP- 1 046 668 beschrieben sind, auf die insbesondere im Hinblick auf die Reste R', R" und R'" ausdrücklich bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoylp-chlorbenzoylmethan, Bis(2-hydroxybenzoyl)methan, 4-Methoxybenzoylbenzoylmethan, Bis(4-methoxybenzoyl)methan, Benzoylformylmethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmethan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-, -propyl-, -butyl-, hexyl- oder -octylester oder mehrkernige β-Ketoester wie sie in der EP-A 433 230 beschrieben sind, auf die ausdrücklich Bezug genommen wird, oder Dehydracetsäure sowie deren Zink-, Magnesium- oder Alkalisalze oder die Alkali- Erdalkali- oder Zinkchelate der genannten Verbindungen, sofern diese existieren und mit den erfindungsgemäßen Stabilisatorzusammensetzungen unter Erzielung der oben genannten Ergebnisse mischbar sind.

1,3-Diketoverbindungen können in einer erfindungsgemäßen Stabilisatorzusammensetzung in einer Menge von bis zu etwa 20 Gew.-%, beispielsweise bis zu etwa 10 Gew.-%, enthalten sein.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Die als Zusatzstoffe geeigneten Polyole können in einer erfindungsgemäßen Stabilisatorzusammensetzung in einer Menge von bis zu etwa 30 Gew.-%, beispielsweise bis zu etwa 10 Gew.-% enthalten sein.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer erfindungsgemäßen Stabilisatorzusammensetzung in einer Menge von bis zu etwa 30 Gew.-%, beispielsweise bis zu etwa 10 Gew.-% enthalten sein.

Eine erfindungsgemäße Stabilisatorzusammensetzung kann darüber hinaus weiterhin als Zusatzstoff eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die oben genannte Offenbarung wird ausdrücklich Bezug genommen, wobei die dort genannten Verbindungen und deren Herstellung als Bestandteil der Offenbarung des vorliegenden Textes verstanden werden.

Eine erfindungsgemäße Stabiiisatorzusammensetzung kann die beschriebenen Organozinnverbindungen in einer Menge von bis zu etwa 40 Gew.-%, insbesondere bis etwa 20 Gew.-%, enthalten.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexyl-phenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann die beschriebenen Phosphitverbindungen in einer Menge von bis zu etwa 30 Gew.-%, insbesondere bis etwa 10 Gew.-%, enthalten.

Eine erfindungsgemäße Stabilisatorzusammensetzung kann als Zusatzstoffe weiterhin blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden verstanden.

Eine erfindungsgemäße Stabilisatorzusammensetzung kann die beschriebenen blockierten Mercaptane in einer Menge von bis zu etwa 30 Gew.%, insbesondere bis zu etwa 10 Gew.-%, enthalten.

Eine erfindungsgemäße Stabilisatorzusammensetzung kann weiterhin Gleitmittel wie Montanwachs, Fettsäureester, gereinigte oder hydrierte natürliche oder synthetische Triglyceride oder Partialester, Polyethylenwachse, Amidwachse, Chlorparaffine, Glyzerinester oder Erdalkaliseifen enthalten, sofern diese Gleitmittel nicht unter den Begriff "Lösemittel" im Sinne der vorliegenden Textes fallen. Als Zusatzstoffe verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Zusatzstoffe geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet.

Eine erfindungsgemäße Stabilisatorzusammensetzung kann die beschriebenen Gleitmittel in einer Menge von bis zu etwa 70 Gew.-%, insbesondere bis etwa 40 Gew.-%, enthalten.

Ebenfalls als Zusatzstoffe für Stabilisatorzusammensetzungen gemäß der vorliegenden Erfindung geeignet sind organische Weichmacher, sofern diese Weichmacher nicht bereits unter den Begriff "Lösemittel" im Sinne der vorliegenden Textes fallen.

Eine erfindungsgemäße Stabilisatorzusammensetzung kann die beschriebenen Weichmacher in einer Menge von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorzusammensetzungen etwa 0,1 Gew.-% oder mehr, beispielsweise etwa 0,5 Gew.-%, 1 Gew.-%, 2 Gew.-% oder 5 Gew.-%.

Im Rahmen einer weiteren Ausführungsform der vorliegenden Erfindung können die erfindungsgemäßen Stabilisatorzusammensetzungen Antioxidantien, UV-Absorber oder Lichtschutzmittel enthalten. Geeignete Antioxidantien sind beispielsweise in der EP-A 1 046 668 auf den Seiten 33 bis 35 beschrieben. Bevorzugt werden im Rahmen der vorliegenden Erfindung als Antioxidantien die Produkte der Irganox®-Reihe (Hersteller: Ciba Specialty Chemicals), beispielsweise Irganox® 1010 oder 1076 oder Produkte der Lowinox-Reihe der Fa. Great Lakes eingesetzt. Geeignete UV-Absorber und Lichtschutzmittel sind dort auf den Seiten 35 und 36 genannt. Auf beide Offenbarungen wird hier ausdrücklich Bezug genommen, wobei die Offenbarungen als Bestandteil des vorliegenden Textes betrachtet werden.

Weiterhin als Zusatzstoffe in den erfindungsgemäßen Stabilisatorzusammensetzungen geeignet sind Hydrotalcite, Hydrocalumite, Zeolithe und Alkalialumocarbonate. Geeignete Hydrotalcite, Hydrocalumite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 oder der DE-C 198 60 798 beschrieben. Auf diese Druckschriften wird ausdrücklich bezug genommen und deren Offenbarung wird als Bestandteil der Offenbarung des vorliegenden Textes betrachtet.

Die als Zusatzstoffe geeigneten Hydrotalcite, Hydrocalumite, Zeolithe und Alkalialumocarbonate können in einer erfindungsgemäßen Stabilisatorzusammensetzung in einer Menge von bis zu etwa 50 Gew.-%, beispielsweise von 0 bis zu etwa 30 Gew.-% enthalten sein.

Ebenfalls als Bestandteil der erfindungsgemäßen Stabilisatorzusammensetzungen geeignet sind Pigmente. Beispiele für geeignete anorganische Pigmente sind Titandioxid, Ruß, Fe₂O₃, Sb₂O₃, (Ba, Sb)O₂, Cr₂O₃, Spinelle wie Kobaltblau und Kobaltgrün, Cd (S, Se) oder Ultramarinblau. Als organische Pigmente sind beispielsweise Azopigmente, Phthalocyaninpigmente, Chinacridonpigmente, Perylenpigmente, Diketopyrrolopyrrolpigmente oder Anthachinonpigmente geeignet.

Eine erfindungsgemäße Stabilisatorzusammensetzung kann weiterhin Füllstoffe wie sie im "Handbook of PVC Formulating", E. J. Wickson, John Wiley & Sons, Inc., 1993, auf den Seiten 393-449 beschrieben sind oder Verstärkungsmittel wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Calciumcarbonat (Kreide), Dolomit, Wollastonit, Magnesiumoxid, Magnesiumhydroxid, Silikate, Glasfasern, Talk, Kaolin, Kreide, Ruß oder Graphit, Holzmehl oder andere nachwachsende Rohstoffe. Im Rahmen einer bevorzugten Ausführungsform der vorliegenden Erfindung enthält eine erfindungsgemäße Stabilisatorzusammensetzung Kreide.

Eine erfindungsgemäße Stabilisatorzusainmensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Im Rahmen einer weiteren Ausführungsform der vorliegenden Erfindung enthält eine erfindungsgemäße Stabilisatorzusammensetzung mindestens ein basisches Calciumsalz. Als basische Calciumsalze geeignet sind beispielsweise Calciumoxid, Calciumcarbonat oder Calciumhydroxid. Die basischen Calciumsalze können gegebenenfalls oberflächenmodifiziert sein.

In einer ganz besonders bevorzugten Ausführungsform enthält die erfindungsgemäße Stabilisatorzusammensetzung mindestens zwei der oben genannten Zusatzstoffe, wobei eine wiederum bevorzugte Mischung beispielsweise mindestens zwei, vorzugsweise jedoch 3, 4, 5 oder mehr der nachfolgend genannten Bestandteile enthält: Baerorapid 30 FD (Prozeßhilfe, Acrylatbasis), Zeolith, Ceasit SW (Calciumstearat), Ca(OH)₂, Paraffinwachs, PE-Wachs, oxidiertes PE-Wachs.

Gegenstand der vorliegenden Erfindung ist auch ein Verfahren zur Herstellung einer Stabilisatorzusammensetzung für halogenhaltige Polymere nach Anspruch 1, bei dem ein Salz einer halogenhaltigen Oxysäure und mindestens eine Treibmittel derart miteinander gemischt werden, dass die durch die Mischung resultierende Zusammensetzung mindestens 0,1 Gew.-%, bezogen auf das Gesamtgewicht der Zusammensetzung, des mindestens einen Treibmittels enthält.

Dabei können die Stabilisatorzusammensetzungen sowohl in flüssiger als auch fester Form vorliegen.

Die Herstellung einer festen Stabilisatorzusammensetzung gemäß der vorliegenden Erfindung gelingt grundsätzlich mit jeder dem Fachmann bekannten Methode zur Vermischung unterschiedlicher fester oder fester und flüssiger Substanzen, beispielsweise durch einfaches Vermischen des mindestens einen halogenhaltigen Salzes einer Oxysäure M(ClO₄)ₖ mit Treibmittel und gegebenenfalls weiteren Zusatzstoffen.

Gemäß dem erfindungsgemäßen Verfahren wird zunächst eine wässrige Lösung eines Salzes einer halogenhaltige Oxysäure M(ClO₄)ₖ, wobei M Li, Na, K, Mg, Ca, Sr, Zn, Al, La, Ce oder Ammonium ist, oder eines Gemischs aus zwei oder mehr solcher Salze, mit einem anorganischen oder organischen Säureanhydrid oder einem anorganischen Basenanhydrid umgesetzt.

Gegenstand der vorliegenden Erfindung ist daher auch ein Verfahren zur Herstellung einer Stabilisatorzusammensetzung für halogenhaltige Polymere nach Anspruch 5, das dadurch gekennzeichnet ist, dass eine wäßrige Lösung einer halogenhaltigen Oxysäure oder eine wäßrige Lösung eines Gemisches aus zwei oder mehr halogenhaltigen Oxysäuren mit einem anorganischen oder organischen Säureanhydrid oder einem anorganischen Basenanhydrid oder einem Gemisch aus zwei oder mehr davon zu einem Reaktionsprodukt umgesetzt wird und das Reaktionsprodukt zur Stabilisierung einer Polymerzusammensetzung eingesetzt wird, die mindestens ein Treibmittel enthält oder mit mindestens einem Treibmittel vermischt wird, so dass der Treibmittelgehalt mindestens etwa 0,1 Gew.-% beträgt.

Hierzu wird im Rahmen einer ersten Ausführungsform der vorliegenden Erfindung ein anorganisches oder organisches Säureanhydrid oder ein anorganisches Basenanhydrid oder ein Gemisch aus zwei oder mehr anorganischen oder organischen Säureanhydriden oder ein Gemisch aus zwei oder mehr anorganischen Basenanhydriden in Pulverform vorgelegt. Das erfindungsgemäße Verfahren kann jedoch ebenso mit einem ein Gemisch aus einem oder mehreren anorganischen Säureanhydriden und einem oder mehreren anorganischen Basenanhydriden durchgeführt werden.

Die im Rahmen des erfindungsgemäßen Verfahrens eingesetzten Pulver weisen dabei vorzugsweise eine durchschnittliche Partikelgröße von weniger als etwa 100 µm, vorzugsweise weniger als etwa 60 µm und insbesondere weniger als etwa 40 µm auf.

Zur Durchführung des erfindungsgemäßen Verfahrens wird eine der obengenannten Anhydridverbindungen oder eines der obengenannten Gemische mit einer wässrigen Lösung eines Salzes einer halogenhaltigen Oxysäure M(ClO₄)ₖ oder eines Gemischs aus zwei oder mehr solcher Salze umgesetzt. Die Umsetzung wird im Rahmen des erfindungsgemäßen Verfahrens so durchgeführt, dass das Anhydrid mit dem zugeführten Wasser der wässrigen Lösung des halogenhaltigen Salzes der Oxysäure M(ClO₄)ₖ oder des Gemischs aus zwei oder mehr dieser Säuren, zu der jeweiligen Säure oder Base reagiert. Die entsprechenden Details einer solchen Umsetzung sind der deutschen Patentanmeldung mit dem Aktenzeichen DE 101 24 734.6 zu entnehmen. Auf diese Druckschrift wird ausdrücklich verwiesen und die Offenbarung der Druckschrift wird als Bestandteil der Offenbarung des vorliegenden Textes betrachtet.

Eine erfindungsgemäße Stabilisatorzusammensetzung kann neben den bereits oben beschriebenen obligatorischen Verbindungen, dem Salz einer halogenhaltigen Oxysäure und dem Treibmittel, noch einen oder mehrere weitere Zusatzstoffe in einer oben genannten Menge enthalten.

Im Rahmen der vorliegenden Erfindung hat sich gezeigt, dass sich die Oniumsalze von Perchloraten zur Stabilisierung von Schäumen halogenhaltiger organischer Polymerer eignen. Die vorliegende Erfindung beschreibt daher auch eine Polymerzusammensetzung gemäß Anspruch 6. Die einzusetzenden Mengen an Oniumsalzen entsprechen den im Rahmen des weiteren Textes für die erfindungsgemäßen Stabilisatorzusammensetzungen beschriebenen Mengen.

Beispiele für derartige halogenhaltige organische Polymere sind Polymere des Vinylchlorids, Vinylharze die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymeren enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE; MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der obengenannten nicht-halogenierten Polymeren mit PVC, insbesondere Gemische von Polyurethanen und PVC.

Weiterhin können mit den erfindungsgemäßen Stabilisatorzusammenstezungen auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Ein weiterer Gegenstand der vorliegenden Erfindung betrifft daher eine Polymerzusammensetzung, mindestens enthaltend ein halogeniertes Polymeres und eine erfindungsgemäße Stabilisatorzusammensetzung oder eine nach einem erfindungsgemäßen Verfahren hergestellte Stabilisatorzusammensetzung.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von 0,1 bis 20 phr, insbesondere etwa 0,5 bis etwa 15 phr oder etwa 1 bis etwa 12 phr. Die Einheit phr steht für "per hundred resin" und betrifft damit Gewichtsteile pro 100 Gewichtsteile Polymeres.

Gegenstand der vorliegenden Erfindung ist daher auch eine Polymerzusammensetzung, wie oben beschrieben, die dadurch gekennzeichnet ist, daß sie die Stabilisatorzusammensetzung in einer Menge von 0,1 bis 20 Gew.-% enthält.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Die vorliegende Erfindung betrifft auch ein Verfahren zur Stabilisierung von Schäumen halogenhaltiger Polymerer gemäß Anspruch 10, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einem Treibmittel und einer einer Stabilisatorzusammensetzung, die mindestens ein Salz einer halogenhaltigen Oxysäure enthält, vermischt wird.

Die Vermischung von Polymeren, dem Treibmittel oder Treibmittelgemisch und der mindestens ein Salz einer halogenhaltigen Oxysäure enthaltenden restlichen Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder als Emulsion oder als Dispersion, als pastöse Mischung, als trockene Mischung, als Lösung oder Schmelze zuzusetzen.

Eine erfindungsgemäße Polymerzusammensetzung kann auf bekannte Weise in eine gewünschte Form gebracht werden. Geeignete Verfahren sind beispielsweise die zur Herstellung von Schaumstoffen oder Schaumkernformkörpern üblicherweise eingesetzten Verfahren.

Eine erfindungsgemäße Polymerzusammensetzung kann zu Schaumformkörpern verarbeitet werden. Gegenstand der vorliegenden Erfindung sind daher auch Schaumformkörper, mindestens enthaltend eine erfindungsgemäße Stabilisatotzusammensetzung oder eine erfindungsgemäße Polymerzusammensetzung.

Der Begriff "Schaumformkörper" umfasst im Rahmen der vorliegenden Erfindung grundsätzlich alle dreidimensionalen Gebilde, die aus einer geschäumten erfindungsgemäßen Polymerzusammensetzung herstellbar sind. Der Begriff "Schaumformkörper" umfasst im Rahmen der vorliegenden Erfindung beispielsweise Automobilbauteile, beispielsweise Automobilbauteile wie sie im Innenraum des Automobils, im Motorraum oder an den Außenflächen eingesetzt werden, Dichtungsprofile, Rohre, Bauprofile, Sidings, Platten oder Coextrudate mit recyceltem Kern. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Gegenstand der vorliegenden Erfindung ist auch die Verwendung einer erfindungsgemäßen Stabilisatorzusammensetzung oder einer gemäß einer erfindungsgemäß hergestellten Stabilisatorzusammensetzung oder einer oben beschriebenen Polymerzusammensetzung zur Herstellung von geschäumten polymeren Formkörpern.

Die Erfindung wird nachfolgend durch Beispiele näher erläutert.

### Beispiele

### Beispiel 1: Herstellung des Perchlorats

7,14 g einer wässrigen Lösung von 70 Gew.-% Natriumperchlorat in Wasser wurden mit einer Mischung von 6,66 g Calciumoxid (Teilchengröße D₅₀: 14,5 µm) und 36,2 g Calciumhydroxid (Teilchengröße D₅₀: 6,5 µm) umgesetzt (Kombination 1). Eine elektronenmikroskopische Untersuchung des Gemischs konnte keine eindeutigen Kristallite von Natriumperchlorat nachweisen. Die Aufnahme eines Röntgendiffraktogramms zeigte keinen Reflex bei 2 Theta = 25,14°, wodurch die Abwesenheit von kristallinem Natriumperchlorat mit einer Kristallitgröße von mehr als 5 nm nachgewiesen werden konnte.

### Beispiel 2: Herstellung von erfindungsgemäßen Polymerzusammensetzungen und von Vergleichszusammensetzungen ohne Perchlorat und/oder ohne Treibmittel

Aus Polyvinylchlorid (Solvic 258 RB), einer Mischung aus Baerorapid 30 FD (processing aid, Acrylatbasis), Zeolith, Ceasit SW (Calciumstearat), Ca(OH)₂, Paraffinwachs, PE-Wachs, oxidiertem PE-Wachs und dem gemäß Beispiel 1 hergestellten Perchlorat wurden unter teilweiser Verwendung von 4 unterschiedlichen zusätzlichen Treibmitteln die in der Tabelle 1 aufgeführten Mischungen hergestellt:

| Rohstoff | 1 | 2 | 3 | 4 | 5 | 6 | 7 | 8 | 9 | 10 |
|---|---|---|---|---|---|---|---|---|---|---|
| Solvic¹ | 100 | 100 | 100 | 100 | 100 | 100 | 100 | 100 | 100 | 100 |
| Kreide | 10 | 10 | 10 | 10 | 10 | 10 | 10 | 10 | 10 | 10 |
| SKR² | 4,35 | 4,35 | 4,35 | 4,35 | 4,35 | 4,35 | 4,35 | 4,35 | 4,35 | 4,35 |
| Perchlorat³ | | | | 0,10 | 0,10 | 0,10 | | | 0,10 | 0,10 |
| ADCA⁴ | | 0,14 | | | 0,14 | | | 0,14 | | 0,14 |
| Treibmittel | | | 0,14 | | | 0,14 | | | | |
| Zinkum | 0,20 | 0,20 | 0,20 | 0,20 | 0,20 | 0,20 | | | | |
| BGAC⁵ | | | | | | | 0,20 | 0,20 | 0,20 | 0,20 |

| | | | | | | | | | | |
|---|---|---|---|---|---|---|---|---|---|---|
| 1 = Polyvinylchlorid 2= 1 Gewichtsteil Baerorapid 30 FD (Prozesshilfe, Acrylatbasis) 0,75 Gewichtsteile Zeolith 0,6 Gewichtsteile Ceasit SW (Calciumstearat) 0,2 Gewichtsteile Ca(OH) 0,7 Gewichtsteile Paraffinwachs 0,8 Gewichtsteile PE-Wachs 0,3 Gewichtsteile oxidiertes PE-Wachs jeweils bezogen auf 100 Teile PVC (phr) 3 = Na-Perchlorat, geträgert auf Ca(OH)₂ 4 = Azodicarbonsäurediamid 5= Butylenglykol-bis(3-aminocrotonat) | | | | | | | | | | |

Die Aufbereitung erfolgt in allen Fällen in einem 101-Heiz-Kühlmischer.

### Beispiel 3: Untersuchung der Zusammensetzungen aus Beispiel 2

Unter Verwendung eines Metallblock-Thermostats der Firma Liebisch wurden die in Beispiel 2 aufgeführten Polymerzusammensetzungen untersucht. Dabei wurden je Zusammensetzung drei Probestücke mit einer Masse von (50 ± 5) mg hergestellt und bei einer Prüftemperatur von (200 ± 0,5) °C hinsichtlich ihrer thermischen Stabilität nach DIN VDE 0472 Teil 614 (HCL-Test) untersucht.

In der folgenden Tabelle 2 sind die dadurch ermittelten Einzelwerte der Stabilitätszeiten sowie die Mittelwerte aus den Stabilitätszeiten der drei Probestücke angegeben.

| Probe Nr: | Stabilitätszeit 1 [min] | Stabilitätszeit 2 [min] | Stabilitätszeit 3 [min] | Mittelwert [min] |
|---|---|---|---|---|
| 1 | 13 | 13 | 13 | 13 |
| 2 | 9 | 9 | 9 | 9 |
| 3 | 11 | 11 | 11 | 11 |
| 4 | 15 | 15 | 15 | 15 |
| 5 | 11 | 12 | 3 | 12 |
| 6 | 12 | 13 | 13 | 13 |
| 7 | 13 | 13 | 13 | 13 |
| 8 | 9 | 10 | 10 | 10 |
| 9 | 18 | 18 | 18 | 18 |
| 10 | 16 | 16 | 17 | 16 |

### Beispiel 4: Herstellung von erfindungsgemäßen Polymerzusammensetzungen und von Vergleichszusammensetzungen ohne Perchlorat und/oder ohne Treibmittel und/oder weiteren Zusatzstoffen

Aus Polyvinylchlorid (Solvic 258 RB), einer Mischung aus Baerorapid 30 FD (processing aid, Acrylatbasis), Zeolith, Ceasit SW (Calciumstearat), Ca(OH)₂, Paraffinwachs, PE-Wachs, oxidiertem PE-Wachs und dem gemäß Beispiel 1 hergestellten Perchlorat wurden unter Verwendung von 2 unterschiedlichen zusätzlichen Treibmitteln die in der Tabelle 1 aufgeführten Mischungen hergestellt. Als optionale weitere Zusatzstoffe sind zum Teil Zinkum SW F und Butylenglykol-bis-3-Aminocrotonat enthalten.

| Rohstoff | 1 | 2 | 3 | 4 | 5 | 6 | 7 | 8 | 9 | 10 |
|---|---|---|---|---|---|---|---|---|---|---|
| Solvic¹ | 100 | 100 | 100 | 100 | 100 | 100 | 100 | 100 | 100 | 100 |
| Kreide | 10 | 10 | 10 | 10 | 10 | 10 | 10 | 10 | 10 | 10 |
| SKR² | 4,35 | 4,35 | 4,35 | 4,35 | 4,35 | 4,35 | 4,35 | 4,35 | 4,35 | 4,35 |
| Perchlorat³ | | | | | | 0,10 | 0,10 | 0,10 | 0,10 | 0,10 |
| Azodicarbonamid* | | 0,14 | | | | | 0,14 | | | |
| Azodicarbonamid* | | | 0,14 | | | | | 0,14 | | |
| Treibmittel* | | | | 0,14 | | | | | 0,14 | |
| ADCA⁴ | | | | | 0,14 | | | | | 0,14 |

| | | | | | | | | | | |
|---|---|---|---|---|---|---|---|---|---|---|
| 1 = Polyvinylchlorid 2= 1 Gewichtsteil Baerorapid 30 FD (Prozesshilfe, Acrylatbasis) 0,75 Gewichtsteile Zeolith 0,6 Gewichtsteile Ceasit SW (Calciumstearat) 0,2 Gewichtsteile Ca(OH)₂ 0,7 Gewichtsteile Paraffinwachs 0,8 Gewichtsteile PE-Wachs 0,3 Gewichtsteile oxidiertes PE-Wachs jeweils bezogen auf 100 Teile PVC (phr) 3 = Na-Perchlorat, geträgert auf Ca(OH)₂ 4= Azodicarbonsäureamid * = marktübliche, Azodicarbonamid enthaltende Treibmittel verschiedener Hersteller | | | | | | | | | | |

Die Aufbereitung erfolgt in allen Fällen in einem 10 1-Heiz-Kühlmischer.

### Beispiel 5: Untersuchung der Zusammensetzungen aus Beispiel 4

Unter Verwendung eines Metallblock-Thermostats der Firma Liebisch wurden die in Beispiel 4 aufgeführten Polymerzusammensetzungen untersucht. Dabei wurden je Zusammensetzung drei Probestücke mit einer Masse von (50 ± 5): mg hergestellt und bei einer Prüftemperatur von (200 ± 0,5) °C hinsichtlich ihrer thermischen Stabilität nach DIN VDE 0472 Teil 614 (HCI-Test) untersucht.

In der folgenden Tabelle 4 sind die dadurch ermittelten Einzelwerte der Stabilitätszeiten sowie die Mittelwerte aus den Stabilitätszeiten der drei Probestücke angegeben.

| Probe Nr: | Stabilitätszeit 1 [min] | Stabilitätszeit 2 [min] | Stabilitätszeit 3 [min] | Mittelwert [min] |
|---|---|---|---|---|
| 1 | 12 | 12 | 14 | 13 |
| 2 | 7 | 7 | 8 | 7 |
| 3 | 9 | 9 | 10 | 9 |
| 4 | 9 | 9 | 10 | 9 |
| 5 | 7 | 7 | 7 | 7 |
| 6 | 18 | 18 | 18 | 18 |
| 7 | 14 | 14 | 14 | 14 |
| 8 | 15 | 15 | 15 | 15 |
| 9 | 14 | 14 | 15 | 14 |
| 10 | 12 | 13 | 14 | 13 |

## Patentansprüche

1. Stabilisatorzusammensetzung für Schäume halogenhaltiger Polymerer, mindestens enthaltend ein Salz einer halogenhaltigen Oxysäure M(ClO₄)ₖ und mindestens ein Treibmittel, wobei der Anteil beider Komponenten zusammen mindestens 0,1 Gew.-%, bezogen auf das Gesamtgewicht der Stabilisatorzusammensetzung, beträgt und die Stabilisatorzusammensetzung das mindestens eine Salz einer halogenhaltigen Oxysäure im Bereich von 0,01 bis 50 Gew.-%, und das mindestens eine Treibmittel in einer Menge im Bereich von 0,5 bis 50 Gew.-%, jeweils bezogen auf das Gesamtgewicht der Stabilisatorzusammensetzung, enthält, **dadurch gekennzeichnet, dass** die Zusammensetzung, bezogen auf den Gesamtgehalt an dem Salz einer halogenhaltigen Oxysäure M(ClO₄)ₖ, weniger als 10 % Kristallite des Salzes mit einer Kristallitgröße von mehr als 3 µm enthält und dass das mindestens eine Salz einer halogenhaltigen Oxysäure M(ClO₄)ₖ mindestens ein Kation M aus der Gruppe bestehend aus Li, Na, K, Mg, Ca, Sr, Zn, Al, La oder Ce oder ein Ammonium-Kation der allgemeinen Formel NR₄⁺, wobei die Reste R unabhängig voneinander für H oder einen linearen oder verzweigten Alkylrest mit 1 bis 10 C-Atomen stehen enthält, und k für 1, 2 oder 3 steht

2. Stabilisatorzusammensetzung nach Anspruch 1, **dadurch gekennzeichnet, dass** das Treibmittel Azodicarbonamid ist.

3. Stabilisatorzusammensetzung nach einem der Ansprüche 1 bis 2, **dadurch gekennzeichnet, dass** die Zusammensetzung mindestens eine auf einer α, β-ungesättigten β-Aminocarbonsäure basierende Verbindung enthält.

4. Stabilisatorzusammensetzung nach einem der Ansprüche 1 bis 3, **dadurch gekennzeichnet, dass** die Zusammensetzung im Wesentlichen frei von schwermetallhaltigen Stabilisatoren ist.

5. Verfahren zur Herstellung einer Stabilisatorzusammensetzung für Schäume halogenhaltiger Polymere nach Anspruch 1, bei dem ein Salz einer halogenhaltigen Oxysäure M(ClO₄)ₖ und mindestens ein Treibmittel derart miteinander vermischt werden, dass die aus der Vermischung resultierende Zusammensetzung 0,5 bis 50 Gew.-% des mindestens einen Treibmittels und 0,01 bis etwa 50 Gew.-% des Salzes einer halogenhaltigen Oxysäure M(ClO₄)ₖ jeweils bezogen auf das Gesamtgewicht der Zusammensetzung, enthält und wobei der Anteil beider Komponenten zusammen mindestens 0,1 Gew.-%, bezogen auf das Gesamtgewicht der Stabilisatorzusammensetzung, beträgt.

6. Polymerzusammensetzung, mindestens enthaltend ein halogenhaltiges Polymeres und eine Stabilisatorzusammensetzung gemäß einem der Ansprüche 3 bis 4 oder eine gemäß einem Verfahren nach Anspruch 5 hergestellte Stabilisatorzusammensetzung.

7. Polymerzusammensetzung nach Anspruch 6, **dadurch gekennzeichnet, dass** sie die Stabilisatorzusammensetzung in einer Menge von 0,1 bis 20 Gew.-% enthält.

8. Verwendung eines Salzes einer halogenhaltigen Oxyosäure M(ClO₄)ₖ oder eines Gemischs aus zwei oder mehr solcher Salze in einer Zusammensetzung zur Stabilisierung einer Polymerzusammensetzung, die mindestens ein halogenhaltiges Polymeres und 0,1 bis 10 Gew.-% eines Treibmittels enthält, wobei die Zusammensetzung, bezogen auf den Gesamtgehalt an dem Salz einer halogenhaltigen Oxysäure M(ClO₄)ₖ, weniger als 10 % Kristallite des Salzes mit einer Kristallitgröße von mehr als 3 µm enthält, und M für Li, Na, K, Mg, Ca, Sr, Zn, Al, La, Ce oder ein Ammoniumkation und k für 1, 2 oder 3 steht.

9. Verwendung einer Stabilisatorzusammensetzung gemäß einem der Ansprüche 1 bis 4 oder einer gemäß Anspruch 5 hergestellten Stabilisatorzusammensetzung oder einer Polymerzusammensetzung gemäß einem der Ansprüche 6 oder 7 zur Herstellung von geschäumten polymeren Formkörpern.

10. Verfahren zur Stabilisierung halogenhaltiger Polymere, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer Stabilisatorzusammensetzung gemäß einem der Ansprüche 1 bis 4 oder einer gemäß Anspruch 5 hergestellten Stabilisatorzusammensetzung vermischt wird, wobei die Stabilisatoizusammensetzung, bezogen auf den Gesamtgehalt an dem Salz einer halogenhaltigen Oxysäure M(ClO₄)ₖ, weniger als 10 % Kristallite des Salzes mit einer Kristallitgröße von mehr als 3 µm enthält, und M für Li, Na, K, Mg, Ca, Sr, Zn, Al, La, Ce oder ein Ammoniumkation der allgemeinene Formel NR₄⁺, wobei die Reste R unabhängig voneinander für H oder einen linearen oder verzweigten Alkylrest mit 1 bis etwa 10 C-Atomen stehen und k für 1, 2 oder 3 steht.

11. Geschäumter Formkörper, mindestens enthaltend eine Stabilisatorzusammensetzung gemäß einem der Ansprüche 1 bis 4 oder eine gemäß Anspruch 5 hergestellte Stabilisatorzusammensetzung oder eine Polymerzusammensetzung gemäß einem der Ansprüche 6 und 7.

## Claims

1. Stabiliser composition for foams of halogen-containing polymers at least comprising a salt of a halogen-containing oxyacid M(ClO₄)ₖ and at least one blowing agent, the proportion of the two components together amounting to at least 0.1% by weight based on the total weight of the stabiliser composition and the stabiliser composition comprising the at least one salt of a halogen-containing oxyacid in the range from 0.01 to 50% by weight and the at least one blowing agent in an amount in the range from 0.5 to 50% by weight, all based on the total weight of the stabiliser composition, **characterized in that**, based on the total content of the salt of a halogen-containing oxyacid M(ClO₄)ₖ, the composition comprises less than 10% crystallites of the salt having a crystallite size of more than 3 µm and **in that** the at least one salt of a halogen-containing oxyacid M(ClO₄)ₖ comprises at least one cation M from the group consisting of Li, Na, K, Mg, Ca, Sr, Zn, Al, La or Ce or an ammonium cation of the general formula NR₄⁺, wherein the radicals R are, each independently of the other, H or a linear or branched alkyl radical having from 1 to 10 carbon atoms and K is 1, 2 or 3.

2. Stabiliser composition according to Claim 1, **characterized in that** the blowing agent is azodicarbonamide.

3. Stabiliser composition according to either of Claims 1 and 2, **characterized in that** the composition comprises at least one compound based on an α,β-unsaturated β-aminocarboxylic acid.

4. Stabiliser composition according to any one of Claims 1 to 3, **characterized in that** the composition is substantially free of heavy-metal-containing stabilisers.

5. Process for the preparation of a stabiliser composition for foams of halogen-containing polymers according to Claim 1 wherein a salt of a halogen-containing oxyacid M(ClO₄)ₖ and at least one blowing agent are mixed with each other such that the composition resulting from the mixing comprises 0.5 to 50% by weight of the at least one blowing agent and 0.01 to about 50% by weight of the salt of a halogen-containing oxyacid M(ClO₄)ₖ, all based on the total weight of the composition, and the proportion of the two components together amounts to at least 0.1% by weight, based on the total weight of the stabiliser composition.

6. Polymer composition at least comprising a halogen-containing polymer and a stabiliser composition according to either of Claims 3 and 4 or a stabiliser composition prepared according to a process according to Claim 5.

7. Polymer composition according to Claim 6, **characterized in that** it comprises the stabiliser composition in an amount of 0.1 to 20% by weight.

8. Use of a salt of a halogen-containing oxyacid M(ClO₄)ₖ or of a mixture of two or more such salts in a composition for stabilizing a polymer composition comprising at least one halogen-containing polymer and 0.1 to 10% by weight of a blowing agent, the composition comprising, based on the total content of the salt of a halogen-containing oxyacid M(ClO₄)ₖ, less than 10% crystallites of the salt having a crystallite size of more than 3 µm and M is Li, Na, K, Mg, Ca, Sr, Zn, Al, La, Ce or an ammonium cation of the general formula NR₄⁺, wherein the radicals R are, each independently of the other, H or a linear or branched alkyl radical having from 1 to 10 carbon atoms and K is 1, 2 or 3.

9. Use of a stabiliser composition according to any one of Claims 1 to 4 or of a stabiliser composition prepared according to Claim 5 or of a polymer composition according to either of Claims 6 and 7, for producing foamed polymeric moulded articles.

10. Method of stabilizing halogen-containing polymers wherein a halogen-containing polymer or a mixture of two or more halogen-containing polymers or a mixture of one or more halogen-containing polymers and one or more halogen-free polymers is mixed with a stabiliser composition according to any one of Claims 1 to 4 or with a stabiliser composition prepared according to Claim 5, the stabiliser composition comprising, based on the total content of the salt of a halogen-containing oxyacid M(ClO₄)ₖ, less than 10% crystallites of the salt having a crystallite size of more than 3 µm and M is Li, Na, K, Mg, Ca, Sr, Zn, Al, La, Ce or an ammonium cation of the general formula NR₄⁺, wherein the radicals R are, each independently of the other, H or a linear or branched alkyl radical having from 1 to 10 carbon atoms and K is 1, 2 or 3.

11. Foamed moulded article at least comprising a stabiliser composition according to any one of Claims 1 to 4 or a stabiliser composition prepared according to Claim 5 or a polymer composition according to either of Claims 6 and 7.

## Revendications

1. Composition de stabilisants pour mousses de polymères halogénés, contenant au moins un sel d'un oxyacide halogéné M(ClO₄)ₖ et au moins un agent gonflant, la proportion de ces deux composants ensemble étant d'au moins 0,1 % en poids par rapport au poids total de la composition de stabilisants et celle-ci contenant l'au moins un sel d'un oxyacide halogéné à raison de 0,01 à 50 % en poids et l'au moins un agent gonflant dans une quantité de l'ordre de 0,5 à 50 % en poids, par rapport au poids total de la composition de stabilisant, **caractérisée en ce que** la composition contient, par rapport à la teneur totale en sel d'un oxyacide halogéné M(ClO₄)ₖ, moins de 10 % de cristallites du sel mesurant plus de 3 µm et **en ce que** l'au moins un sel d'un oxyacide halogéné M(ClO₄)ₖ contient au moins un cation M choisi dans le groupe consistant en Li, Na, K, Mg, Ca, Sr, Zn, Al, La ou Ce ou un cation d'ammonium de formule générale NR₄⁺, les radicaux R représentant, indépendamment l'un de l'autre, H ou un radical alkyle linéaire ou ramifié comprenant 1 à 10 atomes de carbone et K représente 1, 2 ou 3.

2. Composition de stabilisants selon la revendication 1, **caractérisée en ce que** l'agent gonflant est de l'azodicarbonamide.

3. Composition de stabilisants selon l'une quelconque des revendications 1 à 2, **caractérisée en ce que** la composition contient au moins un composé à base d'un acide ß-aminocarboxylique α,ß-insaturé.

4. Composition de stabilisants selon l'une quelconque des revendications 1 à 3, **caractérisée en ce que** la composition est essentiellement exempte de stabilisants contenant des métaux lourds.

5. Procédé de préparation d'une composition de stabilisants pour mousses de polymères halogénés selon la revendication 1, selon lequel on mélange ensemble un sel d'un oxyacide halogéné M(ClO₄)ₖ et au moins un agent gonflant de manière à ce que la composition résultant du mélange contienne de 0,5 à 50 % en poids de l'au moins un agent gonflant et de 0,01 à environ 50 % en poids du sel d'un oxyacide halogéné M(ClO₄)ₖ, respectivement par rapport au poids total de la composition, et la proportion des deux composants ensemble représente au moins 0,1 % en poids du poids total de la composition de stabilisants.

6. Composition polymère contenant au moins un polymère halogéné et une composition de stabilisants selon l'une quelconque des revendications 3 à 4, ou une composition de stabilisants préparée conformément à un procédé selon la revendication 5.

7. Composition polymère selon la revendication 6, **caractérisée en ce qu'**elle contient la composition de stabilisants dans une quantité de 0,1 à 20 % en poids.

8. Utilisation d'un sel d'un oxyacide halogéné M(ClO₄)ₖ ou d'un mélange de deux de ces sels ou plus dans une composition pour stabiliser une composition polymère contenant au moins un polymère halogéné et de 0,1 à 10 % en poids d'un agent gonflant, la composition contenant, par rapport à la teneur totale en sel d'un oxyacide halogéné M(ClO₄)ₖ, moins de 10 % de cristallites du sel mesurant plus de 3 µm et M représente Li, Na, K, Mg, Ca, Sr, Zn, Al, La, Ce ou un cation d'ammonium de formule générale NR₄⁺, les radicaux R représentant, indépendamment l'un de l'autre, H ou un radical alkyle linéaire ou ramifié comprenant 1 à 10 atomes de carbone et k représente 1, 2 ou 3.

9. Utilisation d'une composition de stabilisants selon l'une quelconque des revendications 1 à 4, ou d'une composition de stabilisants préparée selon la revendication 5, ou d'une composition polymère selon l'une quelconque des revendications 6 ou 7 pour fabriquer des corps moulés polymères expansés.

10. Procédé de stabilisation de polymères halogénés selon lequel on mélange un polymère halogéné, ou un mélange d'au moins deux polymères halogénés, ou un mélange d'au moins un polymère halogéné et d'au moins un polymère non halogéné à une composition de stabilisants selon l'une quelconque des revendications 1 à 4 ou une composition de stabilisants préparée selon la revendication 5, la composition de stabilisants contenant, par rapport à la teneur totale en sel d'un oxyacide halogéné M(ClO₄)ₖ, moins de 10 % de cristallites du sel mesurant plus de 3 µm et M représente Li, Na, K, Mg, Ca, Sr, Zn, Al, La, Ce ou un cation d'ammonium de formule générale NR₄⁺, les radicaux R représentant, indépendamment l'un de l'autre, H ou un radical alkyle linéaire ou ramifié comprenant 1 à 10 atomes de carbone et k représente 1, 2 ou 3.

11. Corps moulé expansé, contenant au moins une composition de stabilisants selon l'une quelconque des revendications 1 à 4, ou une composition de stabilisants préparée selon la revendication 5, ou une composition polymère selon l'une quelconque des revendications 6 et 7.
